# EUROPEAN PATENT SPECIFICATION

(11) **EP 3 248 812 B1**
(45) Date of publication and mention of the grant of the patent: **12.12.2018**
(21) Application number: 16768290.5
(22) Date of filing: 26.02.2016
(51) Int. Cl.: B60C 11/03, B60C 11/11, B60C 11/13

(54) **TIRE**
REIFEN
PNEU

(30) Priority: 23.03.2015 JP 2015059528
(43) Date of publication of application: 29.11.2017
(73) Proprietor: Bridgestone Corporation, Tokyo 104-8340 (JP)
(72) Inventor: MATSUNAGA, Midori, Tokyo 104-8340 (JP); YAMAGUCHI, Masashi, Tokyo 104-8340 (JP)
(74) Representative: Oxley, Robin John George
(86) International application number: PCT/JP2016/055957
(87) International publication number: WO 2016/152387

(56) References cited:
- EP-A1- 0 485 883
- WO-A1-2011/145721
- WO-A1-2014/099491
- WO-A1-2014/142349
- WO-A1-2016/009912
- CN-A- 103 158 444
- DE-A1- 4 232 308
- JP-A- 2005 067 267
- JP-A- 2010 000 883
- JP-A- 2013 022 967
- JP-A- 2015 040 023

## Description

### BACKGROUND OF THE INVENTION

### Field of the Invention

The present invention relates to a tire provided with a plurality of blocks on a tread portion.

### Related Background of the Invention

Conventionally, a block pattern having a plurality of blocks is formed on a tread portion of various tires such as a tire for heavy load. During running of a vehicle to which such tires are attached, strain is generated in the tread portion due to deformation of a member in the tread portion of the tire. In addition, the tread portion generates heat due to viscoelasticity of rubber, and thus a temperature of the tread portion rises. Strain and temperature of the tread portion are main factors affecting durability of the tread portion, and in order to enhance durability of the tread portion, strain and temperature rise, generated in the tread portion, are required to be coped with.

For coping with this, in conventional tires, generation of strain is suppressed in the tread portion mainly by adding a reinforcing member into the tread portion or by raising rigidity of the tread portion. However, in this case, along with the increase in the number of members in the tire and a weight of the tire, a cost of the tire possibly rises. Accordingly, regarding durability of the tread portion, suppression of the temperature rise by cooling the tread portion is required. In addition, cooling of the tread portion may become more important in both sides of a tread center portion depending on the internal structure of the tread portion or the condition of use of the tire, the realization of such a demand is required, too.

Here, in a tire provided with a plurality of blocks, generally, the plurality of blocks is arranged between a plurality of circumferential direction grooves, and a plurality of lateral grooves is formed between the blocks. In such a tire, heat radiation is promoted by an air flow generated in the circumferential direction groove, and the tread portion is cooled. However, it is difficult to adjust heat radiation of the circumferential direction groove by controlling the air flow in the circumferential groove. Therefore, in a tire provided with a plurality of blocks between a circumferential groove on a tread center portion and a circumferential groove on each of both sides of the tread center portion, more heat radiation may sometimes occur in the circumferential groove on the tread center portion than in the circumferential groove on each of both sides of the tread center portion. In this case, a cooling effect of the tread portion by the circumferential grooves on both sides of the tread center portion cannot be increased. Therefore, it is difficult to suppress the temperature rise in the tread portion on both sides of the tread center portion.

Moreover, a tire in which the temperature rise of the tread portion is suppressed by a block groove formed in a shoulder block row has been known (refer to Patent Literature 1). However, in the conventional tire described in Patent Literature 1, a block groove is required to be formed in a tread of the block along a tire circumferential direction. Therefore, the block groove cannot be formed in some cases depending on a shape of the block or a required performance of the block. Attention is drawn to the disclosure of Fig. 2 of DE4232308, and EP0485883 and CN103158444.

### Prior Art

### Patent Literature

Patent Literature 1: Japanese Patent Laid-Open No. 2010-125998

### SUMMARY OF THE INVENTION

### Problems to be Solved by Invention

The present invention was made in view of the above-described conventional problems and an object thereof is, in a tire provided with a plurality of blocks between a circumferential groove on a tread center portion and a circumferential groove on each of both sides of the tread center portion, to enhance heat radiation of the circumferential grooves on both sides of the tread center portion and to increase a cooling effect of the tread portion by the circumferential grooves on the both sides of the tread center portion.

### Means for solving Problems

The present invention is a tire comprising: a first circumferential groove arranged on a tread center portion; two second circumferential grooves adjacent to both sides of the first circumferential groove in a tire width direction; a plurality of lateral grooves opened to the first circumferential groove and the second circumferential groove; and a plurality of blocks on a tread portion partitioned by the first circumferential groove, the two second circumferential grooves, and the plurality of lateral grooves. An air flow in a direction opposite to a tire rotating direction is generated in the first circumferential groove and the two second circumferential grooves during running of a vehicle. Each block of the plurality of blocks has: a first wall surface formed from a position where the lateral groove on a downstream side of the air flow is opened to the first circumferential groove, toward an upstream side of the air flow; a second wall surface formed from a position where the lateral groove on the downstream side of the air flow is opened to the second circumferential groove, toward the upstream side of the air flow; and a block corner portion formed at a position where the lateral groove on the upstream side of the air flow is opened to the first circumferential groove. When the two blocks on the upstream side and the downstream side of the air flow adjacent in a tire circumferential direction are viewed, a virtual surface obtained by extending, on the downstream side of the air flow, the first wall surface of the block on the upstream side intersects with the block corner portion of the block on the downstream side or passes through a position in the first circumferential groove inside the block corner portion in the tire width direction. A groove width of each of the two second circumferential grooves gradually increases toward the downstream side of the air flow at the second wall surface of the block.

### EFFECTS OF THE INVENTION

According to the present invention, in the tire provided with the plurality of blocks between the circumferential groove on the tread center portion and the circumferential groove on each of both sides of the tread center portion, heat radiation of the circumferential grooves on the both sides of the tread center portion can be enhanced, and thus a cooling effect of the tread portion by the circumferential grooves on the both sides of the tread center portion can be increased.

### BRIEF DESCRIPTION OF THE DRAWINGS

Fig. 1 is a plan view illustrating a tread pattern of a tire of the present embodiment;
Fig. 2 is a plan view illustrating a part of the tread pattern of the present embodiment;
Fig. 3 is a plan view illustrating a first block corner portion formed in a curved shape;
Fig. 4 is a plan view illustrating a block of another embodiment;
Fig. 5 is a plan view illustrating a block of another embodiment;
Fig. 6 is a plan view illustrating a block of another embodiment;
Fig. 7 is a plan view illustrating a tread portion of a tire provided with a first, a second and a third circumferential groove; and
Fig. 8 is a plan view illustrating a tread pattern of a conventional product.

### DESCRIPTION OF THE PREFERRED EMBODIMENTS

An embodiment of a tire of the present invention will be described by referring to the attached drawings.

The tire of the present embodiment is a pneumatic tire for a vehicle (a tire for heavy load or a tire for passenger car, for example) and is formed having a known structure by a general tire constituent member. Namely, the tire includes a pair of bead portions, a pair of side wall portions located outside the pair of bead portions in a tire radial direction, a tread portion in contact with a road surface, and a pair of shoulder portions located between the tread portion and the pair of side wall portions. Furthermore, the tire includes a pair of bead cores, a carcass arranged between the pair of bead cores, a belt arranged on an outer periphery side of the carcass, and a tread rubber having a predetermined tread pattern.

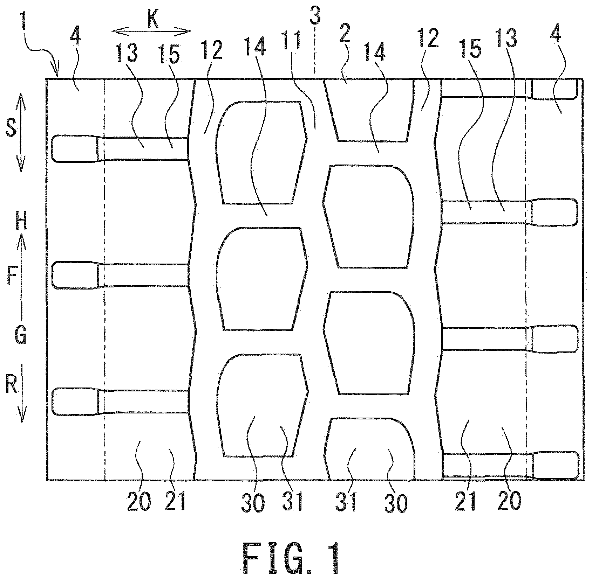

Fig. 1 is a plan view illustrating a tread pattern of a tire 1 of the present embodiment and schematically illustrates a part of a tread portion 2 in a tire circumferential direction S.

Note that the tire 1 is a tire for which a rotating direction during forward movement of the vehicle is designated and it rotates in the tire rotating direction R during forward movement of the vehicle. A tire rotating direction R is designated in correspondence to the tread pattern of the tire 1. The tire 1 is attached to the vehicle so that the tire rotating direction R is matched.

As illustrated, the tire 1 includes a plurality of circumferential grooves 11 and 12, a plurality of lug grooves 13, a plurality of lateral grooves 14, and a plurality of block rows 20 and 30, in the tread portion 2. Each of the plurality of circumferential grooves 11 and 12 is a main groove (circumferential main groove) extending in the tire circumferential direction S, and is continuously formed along the tire circumferential direction S. Moreover, the plurality of circumferential grooves 11 and 12 comprises one first circumferential groove 11 arranged on a tread center portion 3 and two second circumferential grooves 12 adjacent to both sides of the first circumferential groove 11 in a tire width direction K. The tread center portion 3 is a center part of the tread portion 2 in the tire width direction K, and a tire equatorial plane is located on the tread center portion 3.

The first circumferential groove 11 is a center circumferential groove in the tread portion 2, and is arranged between the two second circumferential grooves 12. The second circumferential groove 12 is an outside circumferential groove formed on an outside of the first circumferential groove 11 in the tire width direction K, and is arranged between the first circumferential groove 11 and a shoulder portion 4 (tread end). The shoulder portion 4 of the tire 1 is located outside the tread portion 2 in the tire width direction K. The tire 1 includes the two second circumferential grooves 12 arranged on both sides of the tread center portion 3 and the first circumferential groove 11 in the tire width direction K. Each of the two second circumferential grooves 12 is arranged between the tread center portion 3 and the shoulder portion 4.

The tread portion 2 is partitioned by the plurality of circumferential grooves 11 and 12, and a plurality of the block rows 20 and 30 are formed on the tread portion 2. Each of the plurality of block rows 20 and 30 is a land portion extending along the tire circumferential direction S, and has a corresponding plurality of blocks 21 and 31. Furthermore, the plurality of block rows 20 and 30 comprises two shoulder block rows 20 and two center block rows 30.

The shoulder block row 20 has a plurality of lug grooves 13 and is arranged on an outermost side in the tire width direction K in the tread portion 2. The lug groove 13 extends in the tire width direction K and is formed from the second circumferential groove 12 to the shoulder portion 4. The plurality of blocks 21 of the shoulder block row 20 is sequentially arranged in the tire circumferential direction S, and the lug groove 13 is formed between the blocks 21 adjacent in the tire circumferential direction S. In addition, the lug groove 13 is formed on the shoulder portion 4 side of the second circumferential groove 12 and is opened to the second circumferential groove 12. The tire 1 includes a raised portion 15 formed within each of the lug grooves 13. The raised portion 15 is raised from a groove bottom of the lug groove 13 and connects groove walls (wall surfaces of the block 21) on both sides of the lug groove 13. Here, the raised portion 15 is a tie bar. At least a part of the lug groove 13 is shallower than the second circumferential groove 12 by the raised portion 15.

The center block row 30 has a plurality of lateral grooves 14 and is arranged on a center area of the tread portion 2 which includes the tread center portion 3. Each of the plurality of lateral grooves 14 is a width direction groove extending in the tire width direction K and is formed from the first circumferential groove 11 to the second circumferential groove 12. The plurality of blocks 31 of the center block row 30 is sequentially arranged in the tire circumferential direction S, and the lateral groove 14 is formed between the blocks 31 adjacent in the tire circumferential direction S. Furthermore, the plurality of the lateral grooves 14 is formed between the first circumferential groove 11 and each of the second circumferential grooves 12 and is opened to the first circumferential groove 11 and the second circumferential groove 12.

Here, each of the two center block rows 30 is formed between the first circumferential groove 11 and each of the second circumferential grooves 12, and is arranged on both sides of the tread center portion 3 and the first circumferential groove 11 in the tire width direction K. The plurality of lateral grooves 14 is formed at one side and the other side of the first circumferential groove 11 in the tire width direction K and extends from the first circumferential groove 11 toward both outsides in the tire width direction K. The lateral grooves 14 at one side and the other side of the first circumferential groove 11 in the tire width direction K are alternately arranged along the tire circumferential direction S and are alternately opened to the first circumferential groove 11.

As described above, the tire 1 includes the plurality of blocks 31 formed on the both sides of the first circumferential groove 11 in the tire width direction K. The first circumferential groove 11 extends along the wall surfaces of the plurality of blocks 31 on the tread center portion 3 side, and the second circumferential groove 12 extends along the wall surfaces of the plurality of blocks 31 on the shoulder portion 4 side. The plurality of lateral grooves 14 is inside lateral grooves arranged inside the two second circumferential grooves 12 in the tire width direction K and the plurality of blocks 31 is inside blocks partitioned inside the two second circumferential grooves 12 in the tire width direction K. The plurality of lateral grooves 14 is arranged apart from each other in the tire circumferential direction S and crosses the center block row 30 between the first circumferential groove 11 and the second circumferential groove 12. The plurality of blocks 31 is partitioned by the first circumferential groove 11, the two second circumferential grooves 12, and the plurality of lateral grooves 14 on the tread portions 2, and each of the blocks 31 is formed in a predetermined polygonal shape when viewed from an outside in the tire radial direction.

The tire 1 is attached to the vehicle and rotates in the tire rotating direction R with running (forward movement) of the vehicle. During running of the vehicle (tire rotation) by forward movement of the vehicle, an air flow in a predetermined direction is generated in the first circumferential groove 11 and the two second circumferential grooves 12. The air flow is a relative flow (wind) of air generated by rotation of the tire 1 and is generated in a direction opposite to the tire rotating direction R. An arrow F illustrated in Fig. 1 shows a direction of the air flow generated in the first circumferential groove 11 and the two second circumferential grooves 12. The air flow in the same direction is generated in the first circumferential groove 11 and the two second circumferential grooves 12. In the tire 1 of the present embodiment, by the plurality of blocks 31 formed between the first circumferential groove 11 and each of the second circumferential grooves 12, the air flow is controlled, and the heat radiation of the first circumferential groove 11 and the second circumferential grooves 12 is adjusted. As a result, the heat radiation of the second circumferential grooves 12 located on the both sides of the tread center portion 3 is enhanced. Hereinafter, the adjustment of the heat radiation will be described in detail.

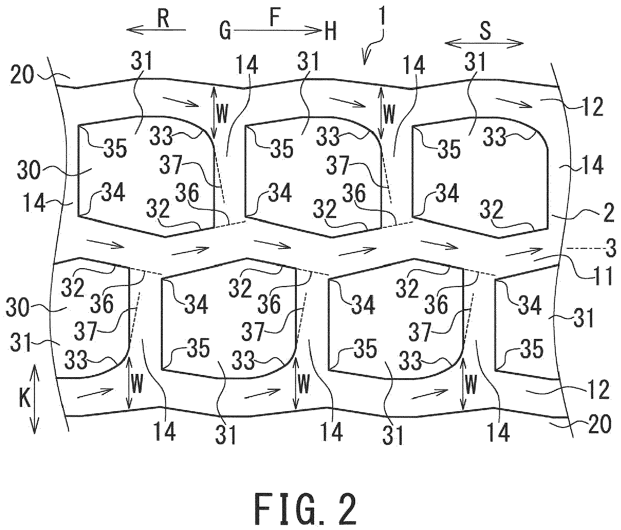

Fig. 2 is a plan view illustrating a part of the tread pattern of the present embodiment and illustrates a portion between the two shoulder block rows 20 in a state in which Fig. 1 is rotated clockwise by 90°.

As illustrated, each block 31 of the plurality of blocks 31 has a first wall surface 32 on the tread center portion 3 side (inside in the tire width direction K), a second wall surface 33 on the shoulder portion 4 side (outside in the tire width direction K), a first block corner portion 34 on the tread center portion 3 side, and a second block corner portion 35 on the shoulder portion 4 side. In the first circumferential groove 11 and the second circumferential groove 12 (refer to an air flow direction F), the air flows from an upstream side G of the air flow toward the downstream side H of the air flow and cools the tread portion 2.

The first wall surface 32 of the block 31 is formed from a position where the lateral groove 14 on the downstream side H of the air flow is opened to the first circumferential groove 11, toward the upstream side G of the air flow. The second wall surface 33 of the block 31 is formed from a position where the lateral groove 14 on the downstream side H of the air flow is opened to the second circumferential groove 12, toward the upstream side G of the air flow. The first wall surface 32 is located in the first circumferential groove 11, and the second wall surface 33 is located in the second circumferential groove 12. Here, the first wall surface 32 is a plane inclined to the outside in the tire width direction K (shoulder portion 4 side) with respect to the tire circumferential direction S toward the downstream side H of the air flow. In contrast to this, the second wall surface 33 is a curved surface inclined to the inside in the tire width direction K (tread center portion 3 side) with respect to the tire circumferential direction S toward the downstream side H of the air flow. In addition, the second wall surface 33 is a projecting surface curved in an arc shape and smoothly connects to the wall surface of the block 31 around it. On the shoulder portion 4 side of the block 31, the second wall surface 33 is curved toward an inside of the lateral groove 14 on the downstream side H of the air flow.

The first block corner portion 34 of the block 31 is a corner portion of the block 31 formed at a position where the lateral groove 14 on the upstream side G of the air flow is opened to the first circumferential groove 11, and is formed at a position where the wall surface of the block 31 in the lateral groove 14 and the wall surface of the block 31 in the first circumferential groove 11 intersect with each other. The second block corner portion 35 of the block 31 is a corner portion of the block 31 formed at a position where the lateral groove 14 on the upstream side G of the air flow is opened to the second circumferential groove 12 and is formed at a position where the wall surface of the block 31 in the lateral groove 14 and the wall surface of the block 31 in the second circumferential groove 12 intersect with each other. The wall surfaces of the block 31 are formed in directions different from each other at the first block corner portion 34 and the second block corner portion 35 as boundaries.

When the two blocks 31 on the upstream side G and the downstream side H of the air flow adjacent in the tire circumferential direction S are viewed, a virtual surface (first virtual surface) 36 extended from the first wall surface 32 of the block 31 on the upstream side G is located on an outside of the lateral groove 14 (lateral groove 14 on the downstream side H) between the two blocks 31. The first virtual surface 36 is an extension surface (virtual extension surface) obtained by virtually extending the first wall surface 32 on the downstream side H of the air flow and smoothly continues from the first wall surface 32 so as to form the same plane as the first wall surface 32. In addition, the first virtual surface 36 is extended toward the block 31 on the downstream side H and is arranged along the first circumferential groove 11. In all the blocks 31 of the center block row 30, the first virtual surface 36 of the block 31 on the upstream side G intersects with the first block corner portion 34 of the block 31 on the downstream side H, or passes through a position in the first circumferential groove 11 on the inside in the tire width direction K (tread center portion 3 side) of the first block corner portion 34. When the first virtual surface 36 passes through the position in the first circumferential groove 11, the first virtual surface 36 passes through the position in the first circumferential groove 11 which is apart from the first block corner portion 34 in the tire width direction K. In addition, the first virtual surface 36 intersects with the block 31 (wall surface of the block 31) on the downstream side H in the first circumferential groove 11.

A groove width W of each of the two second circumferential grooves 12 gradually increases toward the downstream side H (lateral groove 14 on the downstream side H) of the air flow at the second wall surface 33 of the block 31. Furthermore, when the two blocks 31 on the upstream side G and the downstream side H of the air flow adjacent in the tire circumferential direction S are viewed, a virtual surface (second virtual surface) 37 extended from the second wall surface 33 of the block 31 on the upstream side G is extended toward the inside in the tire width direction K. The second virtual surface 37 is an extension surface (virtual extension surface) obtained by virtually extending the second wall surface 33 on the downstream side H of the air flow and smoothly continues from the second wall surface 33 so as to form the same plane as the second wall surface 33. In all the blocks 31 of the center block row 30, the second virtual surface 37 of the block 31 on the upstream side G is extended toward an inside of the lateral groove 14 (lateral groove 14 on the downstream side H) between the two blocks 31 without intersecting with the second block corner portion 35 of the block 31 on the downstream side H. The second virtual surface 37 passes through the lateral groove 14 and intersects with the block 31 (wall surface of the block 31) on the downstream side H in the lateral groove 14. Alternatively, the second virtual surface 37 passes through the lateral groove 14 and is extended to the first circumferential groove 11.

In the tire 1 described above, the first virtual surface 36 intersects with the first block corner portion 34 or passes through the position in the first circumferential groove 11, and thus the air having flowed along the first wall surface 32 becomes hard to flow into the lateral groove 14. Accordingly, the inflow of air from the first circumferential groove 11 to the lateral groove 14 and the second circumferential groove 12 is suppressed, and occurrences of backward flow, swirl flow, and stagnation of the air in the second circumferential groove 12 are prevented. The air in the second circumferential groove 12 is not disturbed by the air flowing in from the lateral groove 14, and smoothly flows toward the downstream side H in the second circumferential groove 12. Along with this, a flow rate of the air which is a cooling medium increases in the two second circumferential grooves 12, and cooling of the tread portion 2 is promoted. In addition, since the air flow in the first circumferential groove 11 deviates from the first block corner portion 34, a pressure rise of the air at the first block corner portion 34 is suppressed.

Since the groove width W of the second circumferential groove 12 gradually increases at the second wall surface 33, a pressure of the air around the second wall surface 33 gradually decreases toward the downstream side H of the air flow. Along with this, the air is drawn from the upstream side G of the second wall surface 33 toward the periphery of the second wall surface 33 in the second circumferential groove 12, and the air flow is accelerated. In addition, since the air flow hits the second block corner portion 35, the pressure of the air rises at the second block corner portion 35. As a result, the pressure of the air at the second block corner portion 35 becomes higher than the pressure of the air at the first block corner portion 34 in the lateral groove 14, and thus the air flows from the second block corner portion 35 toward the first block corner portion 34. Accordingly, an air flow from the second circumferential groove 12 toward the lateral groove 14 is generated, and thus the inflow of air from the lateral groove 14 to the second circumferential groove 12 is suppressed. Furthermore, the air flow in the second circumferential groove 12 is further accelerated. An air flow is concentrated in the second circumferential grooves 12 by the plurality of blocks 31 and the first circumferential groove 11 located between the two second circumferential grooves 12, and thus the air flow in the two second circumferential grooves 12 is simultaneously accelerated.

As described above, in the tire 1 of the present embodiment, heat radiation of the first circumferential groove 11 and the second circumferential groove 12 can be adjusted by controlling the air flow during running of a vehicle. Furthermore, the heat radiation can be promoted by accelerating the air flow in the second circumferential grooves 12 on the both sides of the tread center portion 3. Therefore, the heat radiation of the second circumferential groove 12 can be enhanced, and the cooling effect of the tread portion 2 by the second circumferential groove 12 can be increased. Along with this, the temperature rise of the tread portion 2 can be suppressed by cooling the tread portion 2 on the both sides of the tread center portion 3. Durability of the tread portion 2 can also be effectively enhanced by lowering the temperature around the belt in the tread portion 2, in which a heat generation easily occurs. Further, since the tread rubber of the tread portion 2 can be thickened, the wear life of the tire 1 can be improved.

When the second virtual surface 37 is extended toward the inside of the lateral groove 14, the air flowing along the second wall surface 33 easily flows into the lateral groove 14. In addition, the second wall surface 33 is inclined to the inside in the tire width direction K, and thus the air easily flows from the second circumferential groove 12 toward the lateral groove 14. When the second wall surface 33 is a curved surface, the air smoothly flows along the second wall surface 33, and the air flow directed toward the lateral groove 14 is easily generated. Accordingly, the pressure of the air can be reliably lowered around the second wall surface 33, and the air flow in the second circumferential groove 12 can be further accelerated.

When the groove width of the lateral groove 14 is wider than the groove width W of the second circumferential groove 12, the inflow of air from the first circumferential groove 11 is increased, and thus backward flow of the air in the second circumferential groove 12 easily occurs. In the same way, when the groove width of the first circumferential groove 11 is wider than the groove width of the lateral groove 14, backward flow of the air toward the second circumferential groove 12 easily occurs, and thus the cooling effect by the second circumferential groove 12 may be affected. Therefore, it is preferable for the groove width W of the second circumferential groove 12 to be wider than the groove width of the lateral groove 14, and it is preferable for the groove width of the lateral groove 14 to be wider than the groove width of the first circumferential groove 11. Thus, backward flow of the air can more surely be suppressed. In addition, since the groove width W of the second circumferential groove 12 is wider than the groove width of the lateral groove 14 and the groove width of the first circumferential groove 11, the flow rate of the air in the second circumferential groove 12 is increased, and thus the cooling effect by the second circumferential groove 12 can be promoted.

The groove width W of the second circumferential groove 12 is permissible as long as it gradually increases toward the downstream side H of the air flow at least on the second wall surface 33.
Therefore, the groove width W of the second circumferential groove 12 may be gradually increased toward the downstream side H of the air flow at the upstream side G of the second wall surface 33 in addition to the second wall surface 33. In addition, between the second circumferential groove 12 and the shoulder portion 4, ribs extending in the tire circumferential direction S may be arranged without the lug grooves 13 being formed. The first block corner portion 34 and the second block corner portion 35 may be corner portions formed in bent shapes or may be corner portions formed in curved shapes.

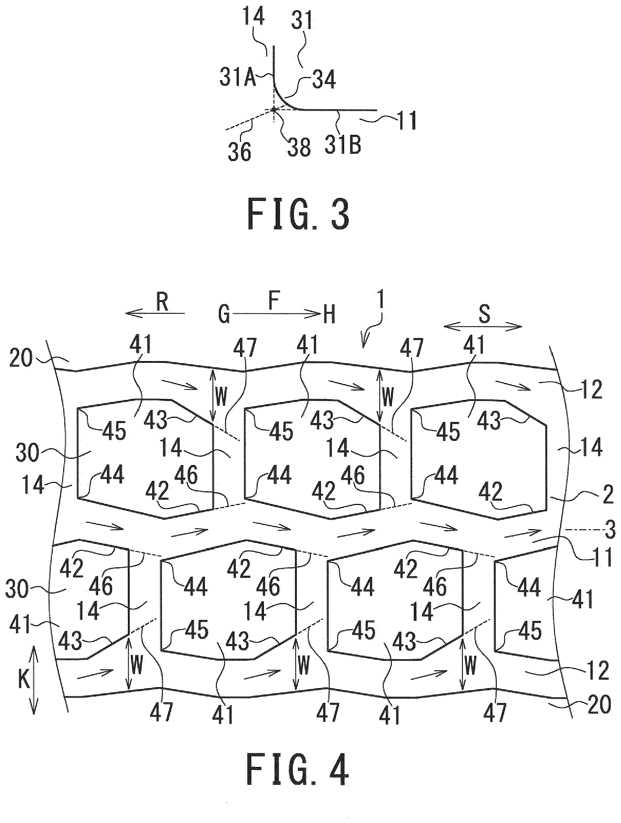

Fig. 3 is a plan view illustrating the first block corner portion 34 formed in a curved shape.

In this case, the first virtual surface 36 passes through, for example, a virtual intersection position 38, and intersects with the first block corner portion 34 as illustrated. The virtual intersection position 38 is a position where virtual surfaces extended from wall surfaces 31A and 31B of the block 31 on the both sides of the first block corner portion 34 intersect with each other. The one wall surface 31A is a wall surface of the block 31 in the lateral groove 14, and the other wall surface 31B is a wall surface of the block 31 in the first circumferential groove 11. The air easily flows from the lateral groove 14 to the first circumferential groove 11, by forming the first block corner portion 34 into a curved shape.

Subsequently, blocks of other embodiments will be described. Each of the following blocks is an example in which a part of the shape of the block 31 is changed, and an effect similar to the above-described effect is exerted. In each block, the same names as those in the block 31 are given to the same constitution as the block 31, and detailed explanation of each constitution will be omitted. Moreover, in the following description, explanation for the same matters as the already-described matters will be omitted.

Figs. 4 to 6 are plan views illustrating blocks 41, 51 and 61 of other embodiments and illustrate a part of tread patterns including the blocks 41, 51 and 61 similarly to Fig. 2.

The block 41 illustrated in Fig. 4 has a first wall surface 42, a second wall surface 43, a first block corner portion 44, and a second block corner portion 45. A first virtual surface 46 is an extension surface extended from the first wall surface 42, and a second virtual surface 47 is an extension surface extended from the second wall surface 43. Here, only the second wall surface 43 is different from the second wall surface 33 of the block 31. The second wall surface 43 of the block 41 is a plane inclined to the inside in the tire width direction K (tread center portion3 side) with respect to the tire circumferential direction S toward the downstream side H of the air flow. The second wall surface 43 is inclined toward the inside of the lateral groove 14 on the downstream side H of the air flow. In this second wall surface 43, the air can easily flow from the second circumferential groove 12 toward the lateral groove 14. Therefore, the pressure of the air can be reliably lowered around the second wall surface 43, and the air flow in the second circumferential groove 12 can be further accelerated.

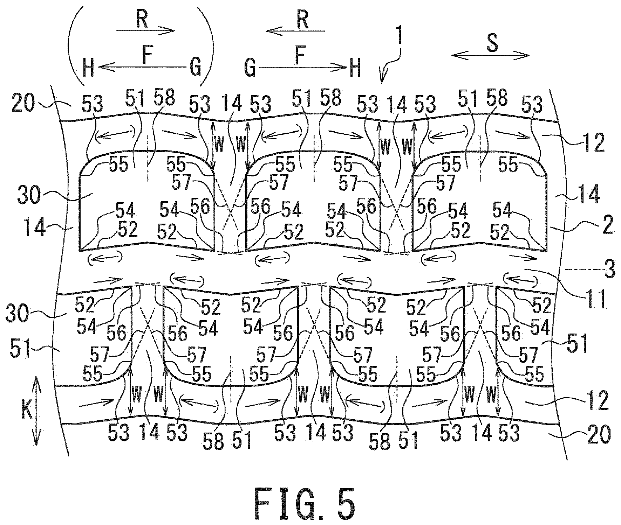

In the block 51 illustrated in Fig. 5, in a plan view where the block 51 is viewed from an outside in the tire radial direction, the block 51 is formed line-symmetrically with respect to a center line 58 passing through the center in the tire circumferential direction S. Therefore, the block 51 has a first wall surface 52, a second wall surface 53, a first block corner portion 54, and a second block corner portion 55, on each of both sides of the center line 58. In addition, a first virtual surface 56 is an extension surface extended from each of the first wall surfaces 52 on the both sides of the center line 58, and a second virtual surface 57 is an extension surface extended from each of the second wall surfaces 53 on the both sides of the center line 58. The first wall surface 52 is a plane inclined to the inside in the tire width direction K with respect to the tire circumferential direction S toward the downstream side H of the air flow. The two first wall surfaces 52 intersect with each other on the center line 58. In this block 51, the tire rotating direction R can be set in both directions of the tire circumferential direction S. Namely, even if the air flow direction F becomes an opposite direction, the block 51 satisfies the conditions similar to those of the block 31 and acts in the same way as the block 31. Therefore, it is not necessary to designate the tire rotating direction R when the tire is to be attached, and convenience of a user is improved.

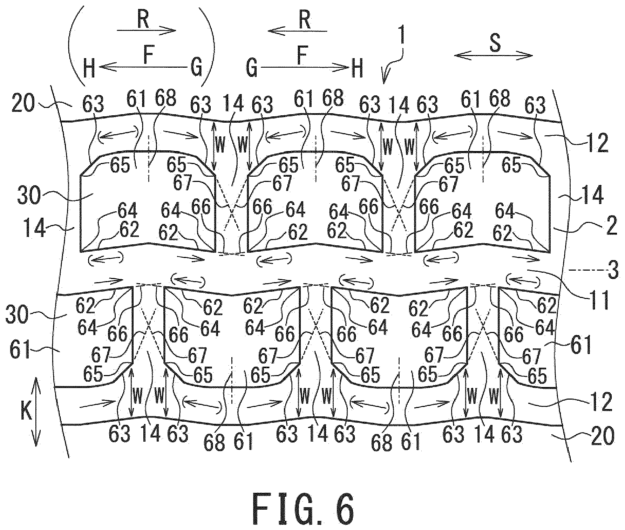

In the block 61 illustrated in Fig. 6, in the same way as the block 51, the block 61 is formed line-symmetrically with respect to a center line 68 passing through the center in the tire circumferential direction S, in a plan view where the block 61 is viewed from the outside in the tire radial direction. Accordingly, the block 61 has a first wall surface 62, a second wall surface 63, a first block corner portion 64, and a second block corner portion 65, on each of both sides of the center line 68. Moreover, a first virtual surface 66 is an extension surface extended from each of the first wall surfaces 62 on both sides of the center line 68, and a second virtual surface 67 is an extension surface extended from each of the second wall surfaces 63 on the both sides of the center line 68. The first wall surface 62 is a plane inclined to the inside in the tire width direction K with respect to the tire circumferential direction S toward the downstream side H of the air flow. The two first wall surfaces 62 intersect with each other on the center line 68. The second wall surface 63 of the block 61 is a plane inclined to the inside in the tire width direction K with respect to the tire circumferential direction S toward the downstream side H of the air flow in the same way as the second wall surface 43 of the block 41. The second wall surface 63 is inclined toward the inside of the lateral groove 14 on the downstream side H of the air flow. In this block 61, in the same way as the block 51, the tire rotating direction R can be set in both directions of the tire circumferential direction S. Namely, even if the air flow direction F becomes an opposite direction, the block 61 satisfies the conditions similar to those of the block 31, and the effect similar to that of the block 31 is exerted. Therefore, it is not necessary to designate the tire rotating direction R when the tire is to be attached, and convenience of a user is improved.

When the tire 1 is a tire for heavy load (such as a tire for truck/bus, for example), a heat generation amount of the tread portion 2 tends to be larger. Therefore, the present invention is suitable for the tire for heavy load. However, the present invention can be applied to various tires other than the tire for heavy load. Although each of the embodiments described above is an example of tire 1 which is provided with the first and the second circumferential groove 11 and 12, it may have one or more circumferential groove formed between the second circumferential groove 12 and the shoulder portion 4 in addition to the first and the second circumferential groove 11 and 12.

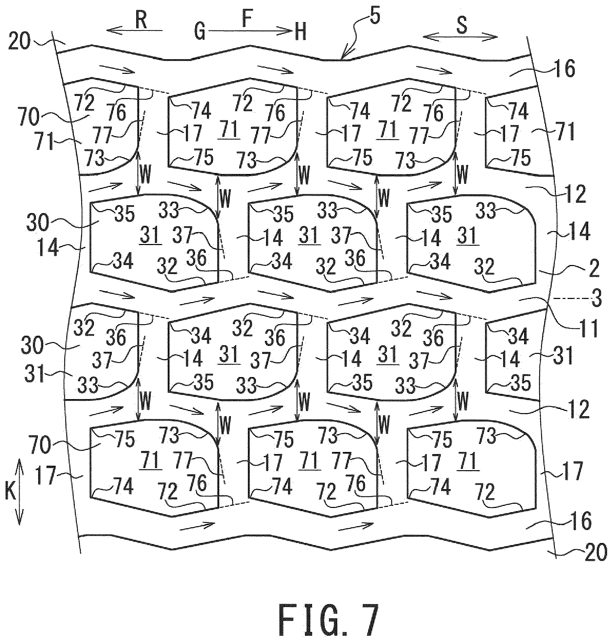

Fig. 7 is a plan view illustrating a tread portion 2 of a tire 5 which is provided with the first, the second and the third circumferential groove 11, 12 and 16, and illustrates a part between the two shoulder block rows 20 similarly to the tire 1 as shown in Fig. 2. Regarding the tire 5 as shown in Fig. 7, the same names as those in the tire 1 are given to the same constitution as the tire 1 as shown in Fig. 2, and detailed explanation of each constitution will be omitted. Moreover, in the following description, explanation for the same matters as the already-described matters will be omitted.

As illustrated, the tire 5 includes a first circumferential groove 11, two second circumferential grooves 12, a plurality of lateral grooves 14, two shoulder block rows 20, two center block rows 30 and a plurality of blocks 31 formed in the center block row 30.

Moreover, the tire 5 includes two third circumferential grooves 16, two outside block rows 70 arranged outside the two second circumferential grooves 12 in the tire width direction K, respectively, a plurality of outside lateral grooves 17, and a plurality of outside blocks 71, in the tread portion 2. The third circumferential groove 16 is a main groove (circumferential main groove) extending in the tire circumferential direction S, and is arranged outside the second circumferential grooves 12 in the tire width direction K. During running of the vehicle, an air flow in a direction opposite to a tire rotating direction R is generated in an inside of the third circumferential groove 16 adjacent to the outside of the second circumferential groove 12 in the tire width direction K, in addition to the insides of the first circumferential groove 11 and the second circumferential groove 12. The third circumferential groove 16 is arranged between the second circumferential groove 12 and the shoulder portion 4 (tread end), and partitions the outside block row 70 in consort with the second circumferential groove 12.

The outside block row 70 has the plurality of outside lateral grooves 17 and the plurality of outside blocks 71 and is formed between the second circumferential groove 12 and the third circumferential groove 16. The plurality of outside lateral grooves 17 of the outside block row 70 is width direction grooves extending in the tire width direction K. The plurality of outside lateral grooves 17 is formed between the second circumferential groove 12 and the third circumferential groove 16 and is opened to the second circumferential groove 12 and the third circumferential groove 16. The plurality of lateral grooves 14 of the center block row 30 is inside lateral grooves (first lateral grooves) arranged inside the second circumferential groove 12 in the tire width direction K. In contrast to this, the plurality of outside lateral grooves 17 is lateral grooves (second lateral grooves) arranged outside the second circumferential groove 12 in the tire width direction K. The lateral grooves 14 and the outside lateral grooves 17 are alternately arranged on the inside and the outside in the tire width direction K of the second circumferential groove 12 and are alternately opened to the second circumferential groove 12. Furthermore, the plurality of outside lateral grooves 17 is formed between the outside blocks 71 adjacent in the tire circumferential direction S and is arranged apart from each other in the tire circumferential direction S.

The plurality of outside blocks 71 of the outside block row 70 is partitioned on a tread portion 2 by the second circumferential groove 12, the third circumferential groove 16 and the plurality of outside lateral grooves 17, and is sequentially arranged in the tire circumferential direction S. The plurality of blocks 31 of the center block row 30 is inside blocks (first blocks) partitioned inside the second circumferential grooves 12 in the tire width direction K. In contrast to this, the plurality of outside blocks 71 is blocks (second blocks) partitioned outside the second circumferential groove 12 in the tire width direction K. The second circumferential groove 12 extends along the wall surfaces of the plurality of outside blocks 71 on the tread center portion 3 side, and the third circumferential groove 16 extends along the wall surfaces of the plurality of outside blocks 71 on the shoulder portion 4 side.

In the tire 5, by the plurality of outside blocks 71 formed between the second circumferential groove 12 and the third circumferential groove 16 in addition to the plurality of blocks 31 of the center block row 30, the air flow is controlled, and the heat radiation of the second circumferential groove 12 and the third circumferential groove 16 is adjusted. As a result, the heat radiation of the second circumferential groove 12 is enhanced. Hereinafter, the outside block 71 will be described. The outside block 71 has a constitution corresponding to the constitution of the block 31 and acts in the same way as the block 31. For this reason, regarding the outside block 71, the same names as those in the block 31 are attached to the constitution corresponding to those of the block 31.

Each outside block 71 of the plurality of outside blocks 71 has a first wall surface 72 on the outside in the tire width direction K, a second wall surface 73 on the inside in the tire width direction K, a first block corner portion 74 on the outside in the tire width direction K, and a second block corner portion 75 on the inside in the tire width direction K. The first wall surface 72 of the outside block 71 is formed from a position where the outside lateral groove 17 on the downstream side H of the air flow is opened to the third circumferential groove 16, toward the upstream side G of the air flow. The second wall surface 73 of the outside block 71 is formed from a position where the outside lateral groove 17 on the downstream side H of the air flow is opened to the second circumferential groove 12, toward the upstream side G of the air flow. The first wall surface 72 is located in the third circumferential groove 16, and the second wall surface 73 is located in the second circumferential groove 12.

The first wall surface 72 is a plane inclined to the inside in the tire width direction K (tread center portion 3 side) with respect to the tire circumferential direction S toward the downstream side H of the air flow. In contrast to this, the second wall surface 73 is a curved surface inclined to the outside in the tire width direction K (shoulder portion 4 side) with respect to the tire circumferential direction S toward the downstream side H of the air flow. In addition, the second wall surface 73 is a projecting surface curved in an arc shape and is curved toward an inside of the outside lateral groove 17 on the downstream side H of the air flow, on the tread center portion 3 side of the outside block 71.

The first block corner portion 74 of the outside block 71 is a corner portion of the outside block 71 formed at a position where the outside lateral groove 17 on the upstream side G of the air flow is opened to the third circumferential groove 16, and is formed at a position where the wall surface of the outside block 71 in the outside lateral groove 17 and the wall surface of the outside block 71 in the third circumferential groove 16 intersect with each other. The second block corner portion 75 of the outside block 71 is a corner portion of the outside block 71 formed at a position where the outside lateral groove 17 on the upstream side G of the air flow is opened to the second circumferential groove 12, and is formed at a position where the wall surface of the outside block 71 in the outside lateral groove 17 and the wall surface of the outside block 71 in the second circumferential groove 12 intersect with each other. The wall surfaces of the outside block 71 are formed in directions different from each other at the first block corner portion 74 and the second block corner portion 75 as boundaries.

When the two outside blocks 71 on the upstream side G and the downstream side H of the air flow adjacent in the tire circumferential direction S are viewed, a virtual surface (first virtual surface) 76 extended from the first wall surface 72 of the outside block 71 on the upstream side G is located on an outside of the outside lateral groove 17 (outside lateral groove 17 on the downstream side H) between the two outside blocks 71. The first virtual surface 76 is an extension surface (virtual extension surface) obtained by virtually extending the first wall surface 72 on the downstream side H of the air flow and smoothly continues from the first wall surface 72 so as to form the same plane as the first wall surface 72. In addition, the first virtual surface 76 is extended toward the outside block 71 on the downstream side H and is arranged along the third circumferential groove 16. In all the outside blocks 71 of the outside block row 70, the first virtual surface 76 of the outside block 71 on the upstream side G intersects with the first block corner portion 74 of the outside block 71 on the downstream side H, or passes through a position in the third circumferential groove 16 on the outside in the tire width direction K (shoulder portion 4 side) of the first block corner portion 74. When the first virtual surface 76 passes through the position in the third circumferential groove 16, the first virtual surface 76 passes through the position in the third circumferential groove 16 which is apart from the first block corner portion 74 in the tire width direction K. In addition, the first virtual surface 76 intersects with the outside block 71 (wall surface of the outside block 71) on the downstream side H in the third circumferential groove 16.

A groove width W of each of the two second circumferential grooves 12 gradually increases toward the downstream side H (outside lateral groove 17 on the downstream side H) of the air flow at the second wall surface 73 of the outside block 71 in addition to the second wall surface 33 of the block 31. Furthermore, when the two outside blocks 71 on the upstream side G and the downstream side H of the air flow adjacent in the tire circumferential direction S are viewed, a virtual surface (second virtual surface) 77 extended from the second wall surface 73 of the outside block 71 on the upstream side G is extended toward the outside in the tire width direction K. The second virtual surface 77 is an extension surface (virtual extension surface) obtained by virtually extending the second wall surface 73 on the downstream side H of the air flow and smoothly continues from the second wall surface 73 so as to form the same plane as the second wall surface 73. In all the outside blocks 71 of the outside block row 70, the second virtual surface 77 of the outside block 71 on the upstream side G is extended toward an inside of the outside lateral groove 17 (outside lateral groove 17 on the downstream side H) between the two outside blocks 71 without intersecting with the second block corner portion 75 of the outside block 71 on the downstream side H. The second virtual surface 77 passes through the outside lateral groove 17 and intersects with the outside block 71 (wall surface of the outside block 71) on the downstream side H in the outside lateral groove 17. Alternatively, the second virtual surface 77 passes through the outside lateral groove 17 and is extended to the third circumferential groove 16.

In the tire 5 which is provided with the first, the second and the third circumferential groove 11, 12 and 16, the second circumferential groove 12 is located between the plurality of blocks 31 and the plurality of outside blocks 71. For this reason, an air flow is concentrated in the second circumferential groove 12, and thus the air flow in the second circumferential groove 12 is accelerated still more. Along with this, the heat radiation of the second circumferential groove 12 and the cooling effect of the tread portion 2 by the second circumferential groove 12 can be increased still more.

In the center block row 30, the blocks 41, 51 and 61 as shown in Fig. 4 to Fig. 6 may be arranged instead of the block 31. Further, the outside block 71 may be formed in a shape corresponding to the block 31 or formed in shapes corresponding to the blocks 41, 51 and 61 as shown in Fig. 4 to Fig. 6. The third circumferential groove 16 may be arranged outside the two second circumferential grooves 12 in the tire width direction K or only outside either of the second circumferential grooves 12 in the tire width direction K. Therefore, the third circumferential groove 16, the plurality of outside lateral grooves 17 and the plurality of outside blocks 71 are arranged outside one of or both the two second circumferential grooves 12 in the tire width direction K.

### (Tire test)

In order to confirm the effects of the present invention, tires of two embodiments (referred to as embodied products 1 and 2) and a tire of the conventional example (referred to as a conventional product) were produced, and their performances were evaluated. Each of the embodied products 1 and 2 includes a plurality of blocks 51 illustrated in Fig. 5 in the two center block rows 30. In the embodied product 2, the groove width W of each of the two second circumferential grooves 12 is wider than the groove width of the lateral groove 14, and the groove width of the lateral groove 14 is wider than the groove width of the first circumferential groove 11. That is, in embodied product 2, the whole of the second circumferential groove 12 is wider than the widest part of the lateral groove 14, and the whole of the lateral groove 14 is wider than the widest part of the first circumferential groove 11. The condition of the groove width of the embodied product 1 differs from the condition of the groove width of the embodied product 2. In particular, in the embodied product 1, the widest part of the second circumferential groove 12 is wider than the lateral groove 14 and the first circumferential groove 11, and the first circumferential groove 11 is wider than the lateral groove 14. The conventional product is different from the embodied product 1 in the plurality of blocks of the two center block rows 30.

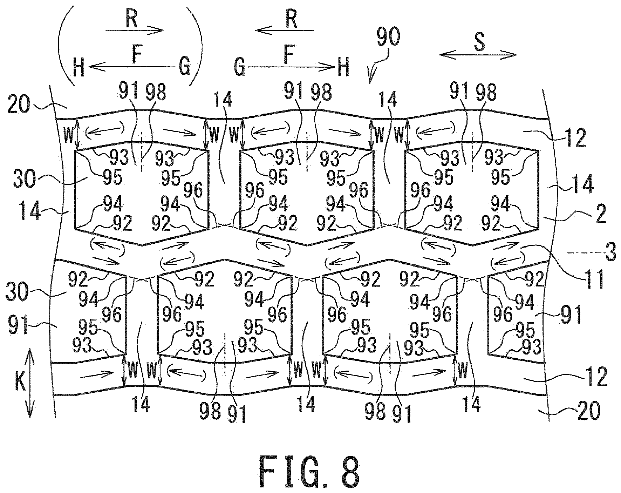

Fig. 8 is a plan view illustrating a tread pattern of the conventional product and illustrates a part of the tread pattern similarly to Fig. 5.

As illustrated, in a tire 90 of the conventional product, a block 91 is formed line-symmetrically with respect to a center line 98 passing through the center in the tire circumferential direction S, in a plan view where the block 91 of the center block row 30 is viewed from the outside in the tire radial direction. Furthermore, the block 91 has a first wall surface 92, a second wall surface 93, a first block corner portion 94, and a second block corner portion 95, on each of both sides of the center line 98. A first virtual surface 96 is an extension surface extended from each of the first wall surfaces 92 on both sides of the center line 98. When the two blocks 91 on the upstream side G and the downstream side H of the air flow adjacent in the tire circumferential direction S are viewed, the first virtual surface 96 of the block 91 on the upstream side G is extended toward the inside of the lateral groove 14 between the two blocks 91 and intersects with the block 91 on the downstream side H in the lateral groove 14. The groove width W of the second circumferential groove 12 is a constant width at the second wall surface 93.

A drum durability test was conducted using the embodied products 1 and 2 and the conventional product, under the following conditions:
Tire size: 11R22.5
Rim width: 7.50
Tire load: 2740 kgf (=26.9 kN)
Tire internal pressure: 700 kPa
Drum speed: 65 km/h
Temperature during test: 38°C

In the test, the embodied products 1 and 2 and the conventional product were brought into contact with an outer circumferential surface of a drum, and the same load was applied to the embodied products 1 and 2 and the conventional product. In that state, the drum was rotated, and the embodied products 1 and 2 and the conventional product were rotated (made to run) by the drum. Thereby, traveling distances sufficient for belts of the embodied products 1 and 2 and the conventional product to endure were measured, and belt durability of the embodied products 1 and 2 and the conventional product was evaluated. Furthermore, heat transfer rate at the groove bottom of the second circumferential groove 12 was measured in the embodied products 1 and 2 and the conventional product, and heat radiation of the second circumferential groove 12 was evaluated.

**[Table 1]**

| | EMBODIED PRODUCT 1 | EMBODIED PRODUCT 2 | CONVENTION AL PRODUCT |
|---|---|---|---|
| HEAT TRANSFER RATE AT GROOVE BOTTOM OF SECOND CIRCUMFERENTIAL GROOVE | 130 | 140 | 100 |
| BELT DURABILITY INDICATED BY TRAVELING DISTANCE | 110 | 113 | 100 |

Table 1 shows test results of the embodied products 1 and 2 and the conventional product. The test results are expressed by index with the conventional product at 100 and indicate that the larger the numerical value is, the higher the performances.

As shown in Table 1, the heat transfer rate (130) of the embodied product 1 and the heat transfer rate (140) of the embodied product 2 are remarkably higher than the heat transfer rate of the conventional product. As a result, it is known that in the embodied products 1 and 2, the heat radiation of the second circumferential groove 12 is enhanced. Furthermore, the belt durability (110) of the embodied product 1 and the belt durability (113) of the embodied product 2 are higher than the belt durability of the conventional product. It is that in the embodied products 1 and 2, the cooling effect by the second circumferential groove 12 becomes higher, and the belt durability is enhanced. The heat transfer rate of the embodied product 2 is higher than the heat transfer rate of the embodied product 1 and the belt durability of the embodied product 2 is higher than the belt durability of the embodied product 1. From this, it is known that in the embodied product 2, the heat radiation of the second circumferential groove 12 is enhanced, and thus the cooling effect by the second circumferential groove 12 becomes higher.

### Reference Signs List

- 1: tire
- 2: tread portion
- 3: tread center portion
- 4: shoulder portion
- 5: tire
- 11: first circumferential groove
- 12: second circumferential groove
- 13: lug groove
- 14: lateral groove
- 15: raised portion
- 16: third circumferential groove
- 17: outside lateral groove
- 20: shoulder block row
- 21: block
- 30: center block row
- 31: block
- 32: first wall surface
- 33: second wall surface
- 34: first block corner portion
- 35: second block corner portion
- 36: first virtual surface
- 37: second virtual surface
- 38: virtual intersection position
- 41: block
- 42: first wall surface
- 43: second wall surface
- 44: first block corner portion
- 45: second block corner portion
- 46: first virtual surface
- 47: second virtual surface
- 51: block
- 52: first wall surface
- 53: second wall surface
- 54: first block corner portion
- 55: second block corner portion
- 56: first virtual surface
- 57: second virtual surface
- 58: center line
- 61: block
- 62: first wall surface
- 63: second wall surface
- 64: first block corner portion
- 65: second block corner portion
- 66: first virtual surface
- 67: second virtual surface
- 68: center line
- 70: outside block row
- 71: outside block
- 72: first wall surface
- 73: second wall surface
- 74: first block corner portion
- 75: second block corner portion
- 76: first virtual surface
- 77: second virtual surface
- F: air flow direction
- G: upstream side
- H: downstream side
- K: tire width direction
- R: tire rotating direction
- S: tire circumferential direction
- W: groove width

## Claims

1. A tire (1) comprising:
a first circumferential groove (11) arranged on a tread center portion;
two second circumferential grooves (12) adjacent to both sides of the first circumferential groove in a tire width direction (K);
a plurality of lateral grooves (14) opened to the first circumferential groove (11) and the second circumferential groove (12); and
a plurality of blocks (31, 41, 51, 61) on a tread portion (2) partitioned by the first circumferential groove (11), the two second circumferential grooves (12), and the plurality of lateral grooves (14), an air flow in a direction opposite to a tire rotating direction (R) being generated in the first circumferential groove (11) and the two second circumferential grooves (12) during running of a vehicle; wherein
each block of the plurality of blocks (31, 41, 51, 61) has:
a first wall surface (32, 42, 52, 62) formed from a position where the lateral groove (14) on a downstream side (H) of the air flow is opened to the first circumferential groove (11), toward an upstream side of the air flow;
a second wall surface (33, 43, 53, 63) formed from a position where the lateral groove (14) on the downstream side (H) of the air flow is opened to the second circumferential groove (12), toward the upstream side of the air flow; and
a block corner portion (34, 44, 54, 64) formed at a position where the lateral groove (14) on the upstream side of the air flow is opened to the first circumferential groove (11); and
when the two blocks (31, 41, 51, 61) on the upstream side and the downstream side (H) of the air flow adjacent in a tire circumferential direction (S) are viewed, a virtual surface (36, 46, 56, 66) obtained by extending, on the downstream side (H) of the air flow, the first wall surface (32, 42, 52, 62) of the block (31, 41, 51, 61) on the upstream side intersects with the block corner portion (34, 44, 54, 64) of the block (31, 41, 51, 61) on the downstream side (H) or passes through a position in the first circumferential groove (11) inside the block corner portion (34, 44, 54, 64) in the tire width direction (K); and **characterized in that**
a groove width (W) of each of the two second circumferential grooves (12) gradually increases toward the downstream side (H) of the air flow at the second wall surface (33, 43, 53, 63) of the block (31, 41, 51, 61).

2. The tire (1) according to claim 1, wherein
when the two blocks (31, 41, 51, 61) on the upstream side and the downstream side (H) of the air flow adjacent in the tire circumferential direction (S) are viewed, a virtual surface (37, 47, 57, 67) obtained by extending, on the downstream side (H) of the air flow, the second wall surface (33, 43, 53, 63) of the block (31, 41, 51, 61) on the upstream side is extended toward an inside of the lateral groove (14) between the two blocks (31, 41, 51, 61) .

3. The tire (1) according to claim 1 or 2, wherein the second wall surface (33, 43, 53, 63) of the block (31, 41, 51, 61) is inclined to the inside in the tire width direction (K) with respect to the tire circumferential direction (S) toward the downstream side (H) of the air flow.

4. The tire (1) according to any of claims 1 to 3, wherein the second wall surface (33, 53) of the block (31, 51) is a curved surface curved toward an inside of the lateral groove (14) on the downstream side (H) of the air flow.

5. The tire (1) according to any of claims 1 to 3, wherein the second wall surface (43, 63) of the block (41, 61) is a plane inclined to the inside in the tire width direction (K) with respect to the tire circumferential direction (S) toward the downstream side (H) of the air flow.

6. The tire (1) according to any of claims 1 to 5, further comprising:
a third circumferential groove (16) arranged outside the second circumferential groove (12) in the tire width direction (K), an air flow in a direction opposite to the tire rotating direction (R) being generated in an inside of the third circumferential groove (16) during running of the vehicle;
a plurality of outside lateral grooves (17) arranged outside the second circumferential groove (12) in the tire width direction (K) and opened to the second circumferential groove (12) and the third circumferential groove (17); and
a plurality of outside blocks (71) partitioned outside the second circumferential groove (12) in the tire width direction (K) by the second circumferential groove (12), the third circumferential groove (16) and the plurality of outside lateral grooves (17); wherein
each outside block of the plurality of outside blocks (71) has:
a first wall surface (72) formed from a position where the outside lateral groove (17) on the downstream side (H) of the air flow is opened to the third circumferential groove (16), toward the upstream side of the air flow;
a second wall surface (73) formed from a position where the outside lateral groove (17) on the downstream side (H) of the air flow is opened to the second circumferential groove (12), toward the upstream side of the air flow; and
a block corner portion (74) formed at a position where the outside lateral groove (17) on the upstream side of the air flow is opened to the third circumferential groove (16); and
when the two outside blocks (71) on the upstream side and the downstream side (H) of the air flow adjacent in the tire circumferential direction (S) are viewed, a virtual surface (76) obtained by extending, on the downstream side (H) of the air flow, the first wall surface (72) of the outside block (71) on the upstream side intersects with the block corner portion (74) of the outside block (71) on the downstream side (H) or passes through a position in the third circumferential groove (16) outside the block corner portion (74) in the tire width direction (K); and
a groove width of the second circumferential groove (12) gradually increases toward the downstream side (H) of the air flow at the second wall surface (73) of the outside block (71).

7. The tire (1) according to any of claims 1 to 6, wherein the groove width of the second circumferential groove (12) is wider than a groove width of the lateral groove (14) ; and
the groove width of the lateral groove (14) is wider than a groove width of the first circumferential groove (11) .

## Patentansprüche

1. Reifen (1), der Folgendes umfasst:
eine erste Umfangsrille (11), die auf einem mittleren Laufflächenabschnitt angeordnet ist;
zwei zweite Umfangsrillen (12) die in einer Reifenbreitenrichtung (K) beiden Seiten der ersten Umfangsrille benachbart sind;
eine Vielzahl von Seitenrillen (14) die zur ersten Umfangsrille (11) und zur zweiten Umfangsrille (12) geöffnet sind; und
eine Vielzahl von Blöcken (31, 41, 51, 61) auf einem Laufflächenabschnitt (2), der durch die erste Umfangsrille (11), die zwei zweiten Umfangsrillen (12) und die Vielzahl von Seitenrillen (14) unterteilt ist, wobei in eine Richtung, die einer Reifendrehrichtung (R) entgegengesetzt ist, in der ersten Umfangsrille (11) und den zwei zweiten Umfangsrillen (12) während des Laufens eines Fahrzeugs ein Luftstrom erzeugt wird; wobei
jeder Block der Vielzahl von Blöcken (31, 41, 51, 61) Folgendes aufweist:
eine erste Wandfläche (32, 42, 52, 62), die von einer Position, in der die Seitenrille (14) auf einer stromabwärtigen Seite (H) des Luftstroms zur ersten Umfangsrille (11) geöffnet ist, zu einer stromaufwärtigen Seite des Luftstroms gebildet ist;
eine zweite Wandfläche (33, 43, 53, 63), die von einer Position, in der die Seitenrille (14) auf der stromabwärtigen Seite (H) des Luftstroms zur zweiten Umfangsrille (12) geöffnet ist, zur stromaufwärtigen Seite des Luftstroms gebildet ist; und
einen Blockeckabschnitt (34, 44, 54, 64), der in einer Position gebildet ist, in der die Seitenrille (14) auf der stromaufwärtigen Seite des Luftstroms zur ersten Umfangsrille (11) geöffnet ist; und
wenn auf die zwei Blöcke (31, 41, 51, 61) auf der stromaufwärtigen Seite und der stromabwärtigen Seite (H) des Luftstroms, die in einer Reifenumfangsrichtung (S) benachbart sind, gesehen wird, eine virtuelle Fläche (36, 46, 56, 66), die durch Verlängern auf der stromabwärtigen Seite (H) des Luftstroms der ersten Wandfläche (32, 42, 52, 62) des Blocks (31, 41, 51, 61) auf der stromaufwärtigen Seite erhalten wird, den Blockeckabschnitt (34, 44, 54, 64) des Blocks (31, 41, 51, 61) auf der stromabwärtigen Seite (H) schneidet oder durch eine Position in der ersten Umfangsrille (11) im Blockeckabschnitt (34, 44, 54, 64) in der Reifenbreitenrichtung (K) geht; und **dadurch gekennzeichnet, dass**
eine Rillenbreite (W) von jeder der zwei zweiten Umfangsrillen (12) zur stromabwärtigen Seite (H) des Luftstroms an der zweiten Wandfläche (33, 43, 53, 63) des Blocks (31, 41, 51, 61) allmählich zunimmt.

2. Reifen (1) nach Anspruch 1, wobei
wenn auf die zwei Blöcke (31, 41, 51, 61) auf der stromaufwärtigen Seite und der stromabwärtigen Seite (H) des Luftstroms, die in der Reifenumfangsrichtung (S) benachbart sind, gesehen wird, eine virtuelle Fläche (37, 47, 57, 67), die durch Verlängern auf der stromabwärtigen Seite (H) des Luftstroms der zweiten Wandfläche (33, 43, 53, 63) des Blocks (31, 41, 51, 61) auf der stromaufwärtigen Seite erhalten wird, zu einer Innenseite der Seitenrille (14) zwischen den beiden Blöcken (31, 41, 51, 61) verlängert wird.

3. Reifen (1) nach Anspruch 1 oder 2, wobei
die zweite Wandfläche (33, 43, 53, 63) des Blocks (31, 41, 51, 61) mit Bezug auf die Reifenumfangsrichtung (S) zur stromabwärtigen Seite (H) des Luftstroms in die Reifenbreitenrichtung (K) zur Innenseite geneigt ist.

4. Reifen (1) nach einem der Ansprüche 1 bis 3, wobei
die zweite Wandfläche (33, 53) des Blocks (31, 51) eine gekrümmte Fläche ist, die auf der stromabwärtigen Seite (H) des Luftstroms zu einer Innenseite der Seitenrille (14) gekrümmt ist.

5. Reifen (1) nach einem der Ansprüche 1 bis 3, wobei
die zweite Wandfläche (43, 63) des Blocks (41, 61) eine Ebene ist, die mit Bezug auf die Reifenumfangsrichtung (S) zur stromabwärtigen Seite (H) des Luftstroms in die Reifenbreitenrichtung (K) zur Innenseite geneigt ist.

6. Reifen (1) nach einem der Ansprüche 1 bis 5, der ferner Folgendes umfasst:
eine dritte Umfangsrille (16), die in die Reifenbreitenrichtung (K) außerhalb der zweiten Umfangsrille (12) angeordnet ist, wobei während des Laufens des Fahrzeugs auf einer Innenseite der dritten Umfangsrille (16) in eine Richtung, die der Reifendrehrichtung (R) entgegengesetzt ist, ein Luftstrom erzeugt wird;
eine Vielzahl von äußeren Seitenrillen (17), die in der Reifenbreitenrichtung (K) außerhalb der zweiten Umfangsrille (12) angeordnet sind und zur zweiten Umfangsrille (12) und zur dritten Umfangsrille (17) geöffnet sind; und
eine Vielzahl von äußeren Blöcken (71), die in der Reifenbreitenrichtung (K) außerhalb der zweiten Umfangsrille (12) durch die zweite Umfangsrille (12), die dritte Umfangsrille (16) und die Vielzahl von äußeren Seitenrillen (17) unterteilt sind; wobei
jeder äußere Block der Vielzahl von äußeren Blöcken (71) Folgendes aufweist:
eine erste Wandfläche (72), die von einer Position, in der die äußere Seitenrille (17) auf der stromabwärtigen Seite (H) des Luftstroms zur dritten Umfangsrille (16) geöffnet ist, zur stromaufwärtigen Seite des Luftstroms gebildet ist;
eine zweite Wandfläche (73), die von einer Position, in der die äußere Seitenrille (17) auf der stromabwärtigen Seite (H) des Luftstroms zur zweiten Umfangsrille (12) geöffnet ist, zur stromaufwärtigen Seite des Luftstroms gebildet ist; und
einen Blockeckabschnitt (74), der in einer Position gebildet ist, in der die äußere Seitenrille (17) auf der stromaufwärtigen Seite des Luftstroms zur dritten Umfangsrille (16) geöffnet ist; und
wenn auf die zwei äußeren Blöcke (71) auf der stromaufwärtigen Seite und der stromabwärtigen Seite (H) des Luftstroms, die in der Reifenumfangsrichtung (S) benachbart sind, gesehen wird, eine virtuelle Fläche (76), die durch Verlängern auf der stromabwärtigen Seite (H) des Luftstroms der ersten Wandfläche (72) des äußeren Blocks (71) auf der stromaufwärtigen Seite erhalten wird, den Blockeckabschnitt (74) des äußeren Blocks (71) auf der stromabwärtigen Seite (H) schneidet oder durch eine Position in der dritten Umfangsrille (16) außerhalb des Blockeckabschnitts (74) in der Reifenbreitenrichtung (K) geht; und
eine Rillenbreite der zweiten Umfangsrille (12) zur stromabwärtigen Seite (H) des Luftstroms an der zweiten Wandfläche (73) des äußeren Blocks (71) allmählich zunimmt.

7. Reifen (1) nach einem der Ansprüche 1 bis 6, wobei
die Rillenbreite der zweiten Umfangsrille (12) breiter ist als eine Rillenbreite der Seitenrille (14) und
die Rillenbreite der Seitenrille (14) breiter ist als eine Rillenbreite der ersten Umfangsrille (11).

## Revendications

1. Pneu (1) comprenant:
une première rainure circonférentielle (11) agencée sur une partie centrale de bande de roulement ;
deux deuxièmes rainures circonférentielles (12) adjacentes aux deux côtés de la première rainure circonférentielle dans le sens de la largeur du pneu (K) ;
une pluralité de rainures latérales (14) ouvertes sur la première rainure circonférentielle (11) et la deuxième rainure circonférentielle (12) ; et
une pluralité de blocs (31, 41, 51, 61) sur une partie de bande de roulement (2) partagée par la première rainure circonférentielle (11), les deux deuxièmes rainures circonférentielles (12) et la pluralité de rainures latérales (14), un écoulement d'air dans une direction opposée à une direction de rotation de pneu (R) étant généré dans la première rainure circonférentielle (11) et les deux deuxièmes rainures circonférentielles (12) pendant le roulement d'un véhicule ; dans lequel :
chaque bloc de la pluralité de blocs (31, 41, 51, 61) a :
une première surface de paroi (32, 42, 52, 62) formée à partir d'une position où la rainure latérale (14) du côté en aval (H) de l'écoulement d'air est ouverte sur la première rainure circonférentielle (11), vers un côté en amont de l'écoulement d'air ;
une seconde surface de paroi (33, 43, 53, 63) formée à partir d'une position où la rainure latérale (14) du côté en aval (H) de l'écoulement d'air est ouverte sur la deuxième rainure circonférentielle (12), vers le côté en amont de l'écoulement d'air ; et
une partie de coin de bloc (34, 44, 54, 64) formée dans une position où la rainure latérale (14) du côté en amont de l'écoulement d'air est ouverte sur la première rainure circonférentielle (11) ; et
lorsque les deux blocs (31, 41, 51, 61) du côté en amont et du côté en aval (H) de l'écoulement d'air adjacents à une direction circonférentielle de pneu (S) sont observés, une surface virtuelle (36, 46, 56, 66) obtenue par extension, du côté en aval (H) de l'écoulement d'air, la première surface de paroi (32, 42, 52, 62) du bloc (31, 41, 51, 61) du côté en amont coupe la partie de coin de bloc (34, 44, 54, 64) du bloc (31, 41, 51, 61) du côté en aval (H) ou passe par une position dans la première rainure circonférentielle (11) à l'intérieur de la partie de coin de bloc (34, 44, 54, 64) dans le sens de la largeur du pneu (K) ; et **caractérisé en ce que** :
une largeur de rainure (W) de chacune des deux deuxièmes rainures circonférentielles (12) augmente progressivement vers le côté en aval (H) de l'écoulement d'air au niveau de la seconde surface de paroi (33, 43, 53, 63) du bloc (31, 41, 51, 61).

2. Pneu (1) selon la revendication 1, dans lequel :
lorsque les deux blocs (31, 41, 51, 61) du côté en amont et du côté en aval (H) de l'écoulement d'air adjacents dans la direction circonférentielle du pneu (S) sont observés, une surface virtuelle (37, 47, 57, 67) obtenue par extension, du côté en aval (H) de l'écoulement d'air, la seconde surface de paroi (33, 43, 53, 63) du bloc (31, 41, 51, 61) du côté en aval est étendue vers un intérieur de la rainure latérale (14) entre les deux blocs (31, 41, 51, 61).

3. Pneu (1) selon la revendication 1 ou 2, dans lequel :
la seconde surface de paroi (33, 43, 53, 63) du bloc (31, 41, 51, 61) est inclinée vers l'intérieur dans le sens de la largeur du pneu (K) par rapport à la direction circonférentielle du pneu (S) vers le côté en aval (H) de l'écoulement d'air.

4. Pneu (1) selon l'une quelconque des revendications 1 à 3, dans lequel :
la seconde surface de paroi (33, 53) du bloc (31, 51) est une surface incurvée, incurvée vers un intérieur de la rainure latérale (14) du côté en aval (H) de l'écoulement d'air.

5. Pneu (1) selon l'une quelconque des revendications 1 à 3, dans lequel :
la seconde surface de paroi (43, 63) du bloc (41, 61) est un plan incliné vers l'intérieur dans le sens de la largeur du pneu (K) par rapport à la direction circonférentielle du pneu (S) vers le côté en aval (H) de l'écoulement d'air.

6. Pneu (1) selon l'une quelconque des revendications 1 à 5, comprenant en outre :
une troisième rainure circonférentielle (16) agencée à l'extérieur de la deuxième rainure circonférentielle (12) dans le sens de la largeur du pneu (K), un écoulement d'air dans une direction opposée au sens de rotation du pneu (R) étant généré dans un intérieur de la troisième rainure circonférentielle (16) pendant le roulement du véhicule ;
une pluralité de rainures latérales extérieures (17) agencées à l'extérieur de la deuxième rainure circonférentielle (12) dans le sens de la largeur du pneu (K) et ouvertes sur la deuxième rainure circonférentielle (12) et la troisième rainure circonférentielle (17) ; et
une pluralité de blocs extérieurs (71) partagés à l'extérieur de la deuxième rainure circonférentielle (12) dans le sens de la largeur du pneu (K) par la deuxième rainure circonférentielle (12), la troisième rainure circonférentielle (16) et la pluralité de rainures latérales extérieures (17) ; dans lequel :
chaque bloc extérieur de la pluralité de blocs extérieurs (71) a :
une première surface de paroi (72) formée à partir d'une position où la rainure latérale extérieure (17) du côté en aval (H) de l'écoulement d'air est ouverte sur la troisième rainure circonférentielle (16), vers le côté en amont de l'écoulement d'air ;
une seconde surface de paroi (73) formée à partir d'une position où la rainure latérale extérieure (17) du côté en aval (H) de l'écoulement d'air est ouverte sur la deuxième rainure circonférentielle (12), vers le côté en amont de l'écoulement d'air ; et
une partie de coin de bloc (74) formée dans une position où la rainure latérale extérieure (17) du côté en aval de l'écoulement d'air est ouverte sur la troisième rainure circonférentielle (16) ; et
lorsque les deux blocs extérieurs (71) du côté en amont et du côté en aval (H) de l'écoulement adjacents dans la direction circonférentielle du pneu (S) sont observés, une surface virtuelle (76) obtenue par extension, du côté en aval (H) de l'écoulement d'air, la première surface de paroi (72) du bloc extérieur (71) du côté en amont coupe la partie de coin de bloc (74) du bloc extérieur (71) du côté en aval (H) ou passe par une position dans la troisième rainure circonférentielle (16) à l'extérieur de la partie de coin de bloc (74) dans le sens de la largeur du pneu (K) ; et
une largeur de rainure de la deuxième rainure circonférentielle (12) augmente progressivement vers le côté en aval (H) de l'écoulement d'air au niveau de la seconde surface de paroi (73) du bloc extérieur (71).

7. Pneu (1) selon l'une quelconque des revendications 1 à 6, dans lequel :
la largeur de rainure de la deuxième rainure circonférentielle (12) est plus large qu'une largeur de rainure de la rainure latérale (14) ; et
la largeur de rainure de la rainure latérale (14) est plus large qu'une largeur de rainure de la première rainure circonférentielle (11).
